# EUROPEAN PATENT APPLICATION

(11) **EP 1 988 496 A1**
(43) Date of publication of application: **05.11.2008**
(21) Application number: 08155432.1
(22) Date of filing: 30.04.2008
(51) Int. Cl.: G06Q 10/00

(54) **A computer-implemented method and a computer system and a computer readable medium for creating videos, podcasts or slide presentations from a business intelligence application**

(30) Priority: 30.04.2007 DK 200700637
(71) Applicant: Targit A/S, 9800 Hjørring (DK)
(72) Inventor: Middelfart, Morten, 9800 Hjørring (DK); Sandlykke, Morten, 9800 Hjørring (DK)
(74) Representative: Boesen, Johnny Peder

(57) **Abstract**

A computer-implemented method of preparing a presentation of a data set retrieved from a database, comprising the steps of: providing in a memory entities, of first metadata items, that respectively define which data to include in data sets retrievable from a data superset stored in the database. Further providing in the memory second metadata items which define properties of a presentation of the at least one data set by means of a graphical object specified by the properties. A graphical image of the data set is prepared by retrieving the data set defined by the first metadata items and by rendering of the data set in accordance with the second metadata items. The step of preparing a graphical image for multiple entities, of first metadata items, so as to provide a consecutive sequence of graphical images is repeated and the sequence is distributed for subsequent playback at a player station, disconnected from the database, so as to convey a collective presentation of the data sets in a progressive manner.

## Description

### Background

Business intelligence (BI) is a general term which refers to computer-implemented technologies that are used to gather, provide access to, and analyze data and information about operations within a company. Business intelligence systems can store and provide ready access to a comprehensive knowledge of the factors affecting the business of the company, such as metrics on sales, production, internal operations, etc. Such knowledge is stored in a database operatively interconnected or integrated with the business intelligence system.

Business intelligence software (also denoted applications) incorporates the ability to mine search (query), analyze, and report. Some modern business intelligence software allow users to cross-analyze and perform deep data research rapidly for better analysis of sales or performance on an individual, department, or company level. In modern applications of business intelligence software, users of such software are able to quickly compile reports from data for forecasting, analysis, and business decision making.

To prepare a report, on data stored in a database, it is a prerequisite that the dataset(s) subject to presentation in the report is/are identified - this is typically performed by submitting some type of query to the database. Additionally, however, a form of presentation has to be selected - typically the presentation is selected from a palette of different forms of presentations. The palette of different forms of presentations may comprise well-known graphs, charts, tables etc.

Different computer-implemented methods for automatically or semiautomatically preparing a query, submitting the query to the database, retrieving data, and rendering the presentation on a desired medium exist. In this respect it is also known to record a user's preferences and apply them to render a presentation automatically, but in accordance with the recorded preferences.

Since such automatic or semi-automatic assistance has become available, less qualified users are now capable of using business intelligence systems. Consequently, a wider crowd of users can take advantage of preparing presentations for analyzing data and an underlying situation represented by the data. However, despite of such automation, the more widespread use of presentations of data from a database leaves an increasingly wider crowd of users occupied in front of their desk-top computers while analyzing data.

Databases used in connection with interfaces providing tools for preparing presentations that are customizable are run on a mainframe, desktop or laptop computer since relatively large sized displays are needed to have the presentations rendered with sufficient detail. Further, a great deal of user interaction is needed to have a presentation rendered precisely as desired and hence a keyboard or the like is often considered to be needed.

Consequently, use of databases for the purpose of performing user customizable presentations has not been successful on mobile and small-sized electronic platforms such as mobile telephones, PDA's, etc.

However, special, but widespread techniques for making multi-media presentations on mobile platforms exist. Video podcast is a term used for the online delivery of video on demand. The term is an evolution specialized for video, coming from the generally audio-based podcast and referring to the distribution of video where consumers can subscribe using a PC, TV, set-top box, media centre or mobile multimedia device.

From a web server, a video podcast can be distributed as a file or as a stream. Downloading complete video podcasts in advance gives the user the ability to play the video podcasts offline on, for example, a portable media player. A downloaded version can be watched many times with only one download, reducing bandwidth costs in this case. Streaming allows seeking (skipping portions of the file) without downloading the full video podcast, better statistics and lower bandwidth costs for the servers; however, users may have to face pauses in playback caused by slow transfer speeds. A podcasting client may work with a separate, or integrated player.

A screencast is a digital recording of computer screen output, often containing audio narration. Just as a screenshot is a picture of a user's screen, a screencast is essentially a movie of what a user sees on their monitor. A screencast is a digital movie in which the setting is partly or wholly a computer screen, and in which audio narration describes the on-screen action.

### Prior art

EP-A 1 659 503 discloses a computer-implemented method of providing a track history before a database, comprising the steps of providing in a storage memory, a track history of choice selectable records that each comprises metadata items applicable to identify a data set from a data superset stored in the database. The track history provides for recalling information which has previously been built up or developed for identifying a specific dataset. Thereby presentations of data sets can be recalled via metadata that define which data to include in a data set retrievable from a data superset stored in the database. This has the effect that the presentations can be recalled in the order they were made, and be prepared with data available at the time the recall is made.

However, this and other prior art methods for re-calling presentations are not fully developed to meet the demands by users of business intelligence systems.

### Summary of the invention

The above and other shortcomings of the prior art are overcome by a computer-implemented method of preparing a presentation of a data set retrieved from a database, comprising the steps of: providing in a memory entities, of first metadata items, that define which data to include in a data set retrievable from a data superset stored in the database; further providing in the memory second metadata items which define properties of a presentation of the data set by means of graphical objects specified by the properties; preparing a graphical image of the data set by retrieving the data set defined by the entities of first metadata items and by rendering of the data set in accordance with the second metadata items. The method is characterized in comprising repeating the step of preparing a graphical image for multiple entities, of first metadata items, so as to provide a consecutive sequence of graphical images for different data sets; and distributing the sequence for subsequent playback at a player station, so as to convey a collective presentation of the individual data sets for presentation in a progressive manner.

Consequently, a collective presentation of the individual data sets is provided in a connected sequence of graphical image presentations. The presentations can be in the form of a slide presentation, a video and/or a podcast. Usually business intelligence systems are configured with advanced user interfaces for performing interactive analyses of large data sets in accordance with a user's preferences. However, within the technical field of computer user interfaces for business intelligence systems, it has not previously been realized that in some situations the most efficient way of communicating large amounts of data information is to provide a consecutive sequence of graphical images for different data sets; and distributing the sequence for subsequent playback at a player station, so as to convey a collective presentation of the individual data sets for presentation in a progressive manner. Thereby desired information is conveyed to the user in accordance with a desired graphical layout (as determined by the presentation properties). The user can enjoy such a presentation on a player station (e.g. a mobile phone, a PDA, a portable video player, a laptop computer, a desktop computer, a kiosk computer) gaining from previously defined preferences. The user may benefit from not having to control the advanced user interface of a business intelligence system e.g. by concentrating solely on viewing and interpreting the content presented in the sequence. Consequently, time can be used more efficiently.

Since the sequence is distributed as a graphical presentation it can be viewed at a station disconnected from the database. It is well-known to provide a player for such a sequence.

In an embodiment the entities, of first metadata items, comprise items that each defines which one-dimensional data to include in a data set; and wherein the metadata items comprised in combination by an entity define a multi-dimensional data set. The first metadata items may count so-called measures and dimensions - terms used in connection with multi-dimensional databases.

The method can further comprise calculating a value as a function of the values comprised by the data set and storing that value as a portion of the second metadata items; and retrieving second metadata items that have a value satisfying a criterion and retrieving first metadata items related to the second metadata items to retrieve the data set selected by the first metadata items that are related to the second metadata items that have a value satisfying the criterion. Thereby, values that describe properties of the values of the data set can be stored and used as an entry for retrieving data sets with properties that fulfils a criterion. This is described in greater detail to handle a so-called key performance index, KPI.

Alternatively or additionally, the method can comprise providing a metric comprised by the second metadata items to represent a frequency at which the first metadata items that define which data to include in a data set was retrieved for the purpose of rendering a graphical image; and retrieving second metadata items that have a value of the metric satisfying a criterion and retrieving first metadata items related to the second metadata items to retrieve the data set selected by the first metadata items that are related to the second metadata items that have a value satisfying the criterion. Thereby, e.g. most frequently used data sets can be easily retrieved.

In an embodiment the method comprises providing information to represent an order in which the entities of first metadata items were retrieved for the purpose of rendering a graphical image; and retrieving second metadata items that have a value of the metric satisfying a criterion and retrieving first metadata items related to the second metadata items to retrieve the data set selected by the first metadata items that are related to the second metadata items that have a value satisfying the criterion. The order may be represented by a sequential number, dates, time, or a certain hierarchical structure. Thereby, a certain sequence of presentations used during or as a portion of an analysis can be recalled in a right order to play back the analysis e.g. as a video.

In an embodiment of the method, the steps of retrieving the data set defined by the entities of first metadata items and preparing graphical images of the data set are performed as a timed activity. Thereby a sequence well-known in terms of form and order can be distributed with updated data to thereby present a recent situation in a well-known scenario.

In an embodiment the sequence of graphical images is distributed with timing information that specifies at which points in time, relative to each other, the images should be presented.

In an embodiment the step of preparing the sequence comprises adding audio information selected in dependence of the metadata items. Consequently, audio can be used to express certain development of data e.g. when the metadata items comprise the so-called key performance index.

The step of preparing the sequence can comprise adding metadata items in a textual message for rendering on an image in the sequence. Thereby explanations, introductions, legends and the like can be added to the presentation to improve communication.

The method can comprise editing the sequence of graphical images before performing the step of distributing the sequence. A user can be provided with a user interface for editing the sequence to arrange the images in a desired order.

A computer system with a memory can be loaded with a program that is configured to perform the computer-implemented method as set forth above.

A computer-readable medium can be encoded with a program that is configured to perform the computer-implemented method as set forth above when run by a computer.

### Brief description of the drawing

The invention will be described in more detail in connection with the drawing, in which:
fig. 1 shows a block diagram of a system with a user interface and a component providing a track history;
fig. 2 shows a flowchart for recording a set of metadata items in connection with a first user interaction;
fig. 3 shows a flowchart of preparing a key performance index from a specified measure in a predefined way, where the measure is specified according to different options;
fig. 4 illustrates a flow and a structure of preparing a sequence of images;
fig. 5 shows a first view with a single graphical presentation object and a track history tree-view component;
fig. 6 shows a data meter and a graphical control object; and
fig. 7 shows a sequence of images.

### Detailed description of a preferred embodiment

Generally, it should be noted that a dimension is a collection of data of the same type; it allows one to structure a multidimensional database. Values of a dimension are denoted positions or dimension values or criteria. A multidimensional database is typically defined as a database with at least three independent dimensions. Measures are data structured by dimensions. In a measure, each cell of data is associated with one single position in a dimension.

The term "OLAP" designates a category of applications and technologies that allow the collection, storage, manipulation and reproduction of multidimensional data, primarily, but not only for analysis purposes.

Special modules may be provided to transform operational data from a source database or transactional database to analytical data in a data warehouse. In some situations it may be inconvenient to transform the operational data to analytical data which are stored in another database. Therefore the operational database, which is typically a relational database, can be emulated such that it exposes an interface from which the operational database is accessible as a multidimensional (analytical) database.

In the below, the term "database" can designate any type of database whether analytical or transactional, but it should be clear that analytical databases are preferred in connection with the present invention.

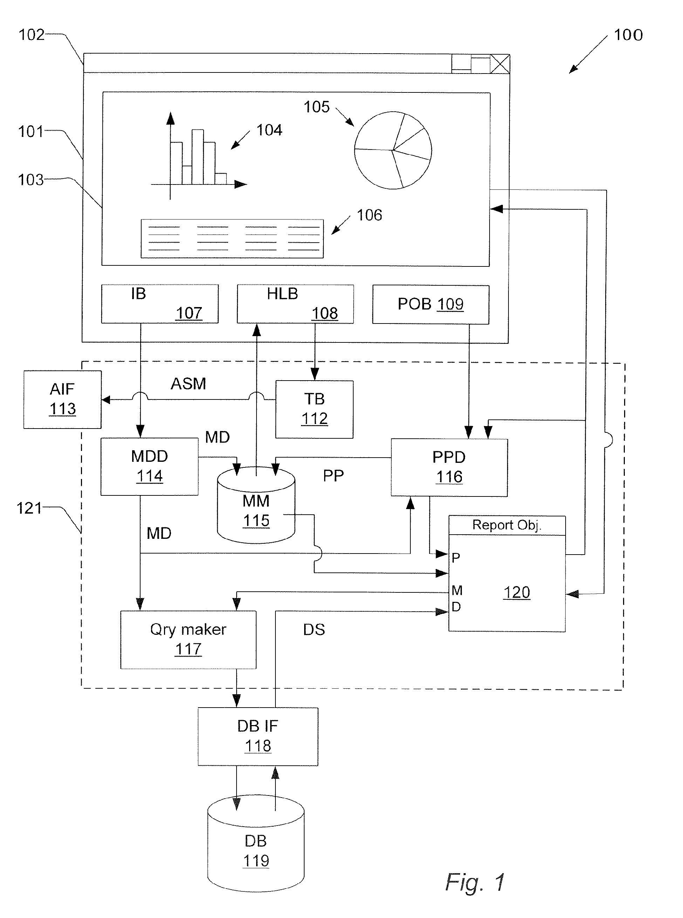

**Fig. 1** shows a block diagram of a system with a user interface and a component providing a track history. The system 100 comprises a user interface 101 which operates in combination with a so-called middleware component 121 and a database DB, 119 with a database interface DB IF, 118.

The middleware component 121 provides functionality of the user interface 101 and is configured to receive inputs from the user interface and provide outputs to the user interface 101. The middleware component 121 provides contents to the user interface 101 by means of among other means the database 119. The database 119 is accessed via the database interface 118. The middleware component is also configured to submit a query to the database 119 via the database interface 118 and to retrieve a result dataset from the database 119 via the database interface. Preferably, the database interface comprises a cache memory for fast retrieval of a previously retrieved dataset.

The user interface 101 is shown in the form of a window which has a control bar 102 with controls for closing, maximizing and minimizing the window on a display. The window comprises control components in the form of an input text box 107, a track history list box 108, a presentation options box 109, and a data report 103 in which different graphical presentation objects 104,105,106 are arranged. The data report can thus be arranged as a container of the presentation objects. This data report or container is also designated a view or view structure. Different graphical presentation objects are arranged in the view, e.g. as shown a bar chart object 104, a pie chart object 105, and a table object 106. These graphical presentation objects each provides a presentation of a dataset retrieved from the database 119.

The user interface 101 and the middleware component 121 provide in combination the following functionality:
In a first situation, a user can submit a request for a data set to be presented by means of the view or data report 103. The request can be submitted in the form of a natural language or pseudo-natural language comprising words or text items which identify metadata items in the database 119. The request is processed by a metadata determining unit 114 of the middleware component 121. The metadata determining unit 114 provides an output with metadata items for identifying a dataset in the database 119. The metadata items are stored in a record in a metadata memory MM, 115. Further, the metadata items are forwarded to a query maker 117 which provides a formal query according to a syntax accepted by the database interface 118. The database interface 118 retrieves the dataset identified by the metadata items, and thus the formal query, from the database 119. Generally, metadata items that identify a dataset or rather define which data to include in a data set retrievable from a data superset stored in the database are denoted first metadata items. Thus, there is provided in a memory, entities, of first metadata items, that define which data to include in a data set retrievable from a data superset stored in the database. Each entity may comprise metadata for identifying one or more data sets.

The retrieved data set is provided to a report object 120 which collects the metadata items, for identifying the data set, and presentation properties for rendering a presentation of the dataset in the view 103. Additionally, the report object provides methods for interacting with the view or the graphical presentation objects thereof.

The presentation properties are provided by a presentation properties determining (PPD) unit 116 which has a first mode where presentation properties are determined automatically from the metadata items, MD, provided by the metadata determining unit 114. This mode is described in more detail in co-pending application EP 1 577 808. In a second mode the PPD unit 116 receives a user's input to modification of the presentation properties via the presentation options box 109. Thereby, the presentation can be adapted to a user's preferences. In a third mode, a combination of functionality of the first and second modes is provided.

The presentation properties provided by the PPD unit 116 is optionally stored in the record containing the metadata items of the presentation. Generally, presentation properties are comprised by second metadata items. Thus, there is stored second metadata items which define properties of a presentation of the data set by means of graphical objects specified by the properties.

In a second situation, a user can retrieve a former request for data, in the form of metadata items, stored in a record. The user can make a choice to select the record from the metadata memory 115 by means of the history list box 108 on the user interface 101. Further, the user is provided with an option of selecting a transformer of a transformer bank TB, 112. The transformer takes the metadata items, representing the former request for data, and provides the metadata as application specific metadata, ASM, to an application interface AIF, 113. The application interface 113 is configured to launch an application or a function of an application augmented by the application specific metadata as described in EP 1 659 503.

In a third situation, a user can request further data by an action directed directly to an element of a graphical presentation object of the view. In response to detecting the action, datasets of the individual presentations of the view are changed to provide for exploring or analyzing the datasets further. This will also be described in greater detail in connection with the following figures.

Reverting to the first situation, a user can request data by means of the input text box 107 wherein the user can write a question in a natural language in a preferred language e.g. the English language. From a user's perspective this question constitutes a query to the database 119. In an exemplary embodiment the database 119 can contain the following data items, wherein the data items are categorized as measures or dimensions and wherein a dimension exists at different levels such as day, month, and year:

| **Measures** | **Dimensions:** |
|---|---|
| 'turnover' | 'time' (level 0: Year; level 1: Month; level 2: Day) |
| 'cost' | 'Customer' (level 0: Group; level 1: Name) |
| 'sales' | 'Product' (level 0: group; level 1: Name) |
| 'revenue' | 'Country' |
| 'budget' | 'BusinessUnit' |

Thereby e.g. the following questions can be asked:
1) I would like to see 'cost' grouped by 'time, month'
2) I would like to see 'turnover' grouped by 'time, month', 'customer, group' and 'product, name'
3) I would like to see 'turnover' for year 2004
4) I would like to see 'country'

A question like the above ones are forwarded to a metadata determination unit 114 which is arranged to identify metadata items and their category and levels by parsing the question.

Based on the identified metadata items, the metadata determination unit 114 is able to look up a metadata memory 115 of previously used combinations of metadata and presentation properties. The contents of the storage memory 115 can have the following form as shown in table 1:

**Table 1**

| Data | Presentation | Frequency |
|---|---|---|
| Time, Level 1 | type=Barchart; legend=off; | 3 |
| Turnover | labels=off; 3D- | |
| | effects=Orthogonal | |
| Country; | type=map; legend=off; | 3 |
| Contribution Margin | labels=on; 3D-effects=None | |
| Customer, Level 0; | Type=Crosstab; legend=off; | 2 |
| Turnover; | labels=off; 3D-effects=None | |
| Cost; | | |
| Contribution Margin | | |
| ··· | ··· | ··· |

By searching the storage memory 115, with contents as shown in table 1 above, for a match on the data items and levels identified from the question, it is possible to determine whether a previous presentation matching the question has been used. Thereby preferred presentation properties can be found. If for instance it is determined that a question involves the data item 'time, level 1' and 'turnover', it can be deduced that the preferred presentation of these data items is a bar chart with properties as shown in table 1 above.

Presentation properties are determined by the presentation determining unit 116 based on the result of the search for matching data items and levels. The determined presentation properties are stored in a presentation memory object 120.

The metadata determining unit 114 converts the question or the metadata, as the case may be, to a query that can be submitted to a database 119 via a database connection. In response to the query, the database provides a result dataset. This result dataset is sent to a presentation memory object 120. Thereby the result data set and the presentation properties are handled in the same memory object 120.

Via the presentation determining unit 116, the presentation properties from the data object or from the presentation options box 109 can be used for updating the frequency count and/or another update of the storage with the registered combinations of data and presentation properties in storage memory 115. The frequency count and/or another update of the storage can be updated in response to a user changing focus from the data report 103 to the input box 107 and/or closing or minimizing the window 102. Alternatively, a button or other control (not shown) on the user interface 101 can be used as an acceptance of storing the presentation properties of the present presentation and/or update the frequency count. In the latter case, a more transparent update is provided.

In the third situation, wherein a user can request further data by an action directed directly to a figure or element of the view, a data item is bound to the element and contains metadata associated with the element. The metadata is preferably a criterion in the form of a value or range of values of a dimension i.e. a so-called dimension value. Thus, when an element is selected, metadata associated with the element is retrieved or deduced. In that situation, the report object 120 is configured to identify such metadata items and provide modified datasets as determined by the metadata associated with the element in response to the action.

In any of the situations, there is thus prepared a graphical image of the data set by retrieving the data set defined by the entities of first metadata items and by rendering of the data set in accordance with the second metadata items.

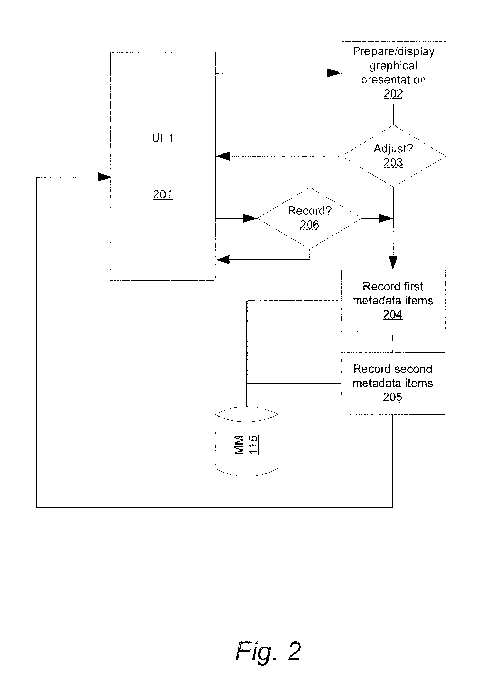

**Fig. 2** shows a flowchart for recording a set of metadata items in connection with a first user interaction. The first user interaction 201 can take place as described in connection with any of the above-mentioned first three situations by means of the system 100. As a result of the user interaction a graphical presentation is prepared and displayed in step 202. Depending on further user interaction it is determined in step 203 whether any adjustments of the graphical presentation were made during the user interaction. In the positive event, changes to the graphical presentation are made.

In the negative event of step 203, first metadata items are recorded in step 204 and stored in the metadata memory 115. Alternatively, the metadata items are recorded in the positive event thus also recording metadata used in intermediate or draft presentations. Other events can also trigger recording of metadata items. The first metadata items select the dataset from the database and comprise a measure and a dimension. In an embodiment, the first metadata items comprise dimension and/or a level of the dimension and a criterion on the dimension.

Subsequently, second metadata items are recorded in step 205 and stored in the metadata memory 115. The second metadata items comprise other metadata comprising a metric representing use of the metadata items for preparing graphical presentations. In an embodiment, the second metadata items comprise calculated values or estimates such as trend values and goal values.

The second metadata items can also or alternatively comprise presentation properties. In an embodiment, the metadata items comprise a property representing a desired development of values of the measure. The property is e.g. a binary value indicating that either an increasing or a decreasing development of measure values is desired. The property is determined from presentation properties e.g. relating to a colour coding scheme of a dataset that has been subject to a graphical presentation. If for instance relatively high values are mapped to a colour code representing the colour green and relatively low values are mapped to a colour code representing the colour red and any intermediate values to intermediate colours e.g. in a yellow tone, then the property can be asserted from the colour coding scheme e.g. by asserting that green represents a desired development and thus that higher values represents a desired development. Thereby, it is possible to estimate a goal value which is a function of the property representing a desired development. As an example a goal can be estimated by calculating the average of measure values and adding 20% in the above situation, where higher values represent a desired development.

When metadata items have been recorded the flow reverts to the user interaction 201 for any further data analysis. In this way metadata items are recorded as a user has a data analysis prepared. In a preferred embodiment this is carried out concurrently with the user interaction, but initiated at a predefined event or at predefined events e.g. when a user presses an update button, requests a presentation, or at other predefined events detectable by the user interface.

During the user interaction there is an option 206 of explicitly recording metadata representing a current view or object. In this way a user may go through an analysis or pre-recorded analyses and select what to record for subsequent sequential playback.

It should be noted that the metadata items can be stored in the metadata memory 115 e.g. as disclosed in co-pending application EP 1 659 503.

Thus, first metadata may comprise a measure, a dimension, a level of the dimension, and a dimension value.

Second metadata may comprise a metric representing use of the metadata items for preparing graphical presentations; calculated values or estimates such as trend values and goal values; a property representing a desired development of values of the measure; and presentation properties comprising any values identifying and/or describing an object providing a graphical presentation.

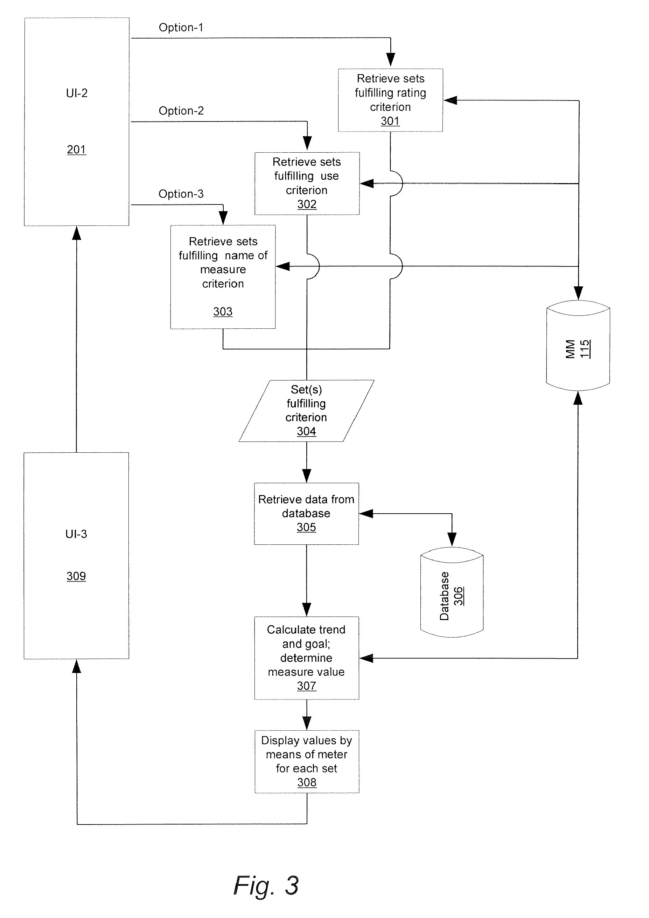

**Fig. 3** shows a flowchart of preparing a key performance indicator, KPI, from a specified measure, where the measure is specified according to a selected option. The first user interaction 201 can take place as described above by means of the system 100.

As a result of the user interaction 201, display of a key performance indicator is requested and an option is selected from the set of: Option-1, Option-2 and Option-3. The user can select the option in connection with the request or the option can be predefined so as to avoid asking for selection of an option every time the request is performed.

In an embodiment, display of a key performance indicator commences on an automatically generated event 310 e.g. related to starting the system 100 or a software application comprising the user interface 101. The option can be predefined so as to avoid asking for selection of an option in response to the automatically generated event.

If Option-1 is selected, a metadata set stored in metadata memory 115 and fulfilling a performance criterion is retrieved in step 301. In case multiple metadata sets fulfil the criterion such sets are retrieved. The performance criterion selects metadata sets which comprise measure values and/or first metadata items and/or second metadata items that fulfil the criterion. For instance the performance criterion can be formulated to select metadata sets based on an expression which is a function of a trend value, goal value and a given data point of the measure. By means of the expression the values and sub-expressions of values can be assigned to different weighing factors.

Such an expression can be: KPI = ((goal-actual)*a1 + trend*a2)*c1.
where KPI is the result of the expression, goal and trend are metadata items, and a1 and a2 are weighing factors. (goal-actual) is a sub-expression. The value of KPI can be stored in the metadata set. By properly assigning a1 and a2 it is possible to define the importance of the values. c1 is the property representing a desired development e.g. being +1 or -1.

An alternative expression can be:
if a desired development is towards higher values (e.g. c1 = +1) then:
if trend > 0 and actual > goal then KPI =4
if trend > 0 and actual < goal then KPI =3
if trend < 0 and actual > goal then KPI =2
if trend < 0 and actual < goal then KPI =1

This alternative expression creates up to four categories for the metadata sets.

It is possible to formulate other alternative expressions which provide a desired indicator.

By mapping an expression and a criterion, on which KPI values to select, to a phrase it is possible to assign a metadata set and consequently a data set to a phrase like "show biggest problems" or "show biggest opportunities". These expressions can in turn be used by a user to request a presentation via the user interface since a phrase and a KPl value is mapped to metadata items with a KPI value and thus a data set to be selected by metadata (e.g. by a measure, a dimension and a dimension value) to provide a presentation as defined by the presentation properties. The presentation properties are a portion of the metadata. Due to this mapping a very intuitive user interface can be established which requires only very few user inputs.

If Option-2 is selected, a metadata set stored in metadata memory 115 and fulfilling a use criterion is retrieved in step 302. The use criterion is defined to match the metric representing use. If for instance the metric holds a frequency of use, the use criterion selects a range of use frequencies. The criterion can be defined in different ways e.g. to select the most frequently used set or the three most frequently used sets. If for instance the metric holds a date of use, the use criterion selects a range of dates. The criterion can be defined in different ways e.g. to select the most recently used set.

If Option-3 is selected, a metadata set stored in metadata memory 115 and fulfilling a name criterion is retrieved in step 303. Sets comprising the named measure are selected.

As a result of either one of the options being selected, set(s) 304 fulfilling the respective criterion is/are retrieved 305.

Based on the set(s) 304 a dataset, with multiple multi-dimensional data points, is selected 305 from the database 306 by use of the set of metadata items or at least a portion of the metadata items e.g. the first metadata items.

Subsequently, in step 307 calculation of a trend value of the measure over a term of the dimension, where the term is defined by a criterion on the dimension, is performed. Additionally or alternatively, calculation of a goal value for the measure at a predetermined dimension value based on values of the measure at dimension values fulfilling the criterion is performed.

In an embodiment, the trend value and goal value is retrieved from the database. Thereby, it is not necessary to calculate the values at this point in the flowchart.

Following the above, a step 308 of displaying a first value by means of the data meter is performed. The first value can be a measure value or goal value or trend value. In an embodiment, this step comprises displaying a collection of values e.g. the measure value and the goal value and the trend value.

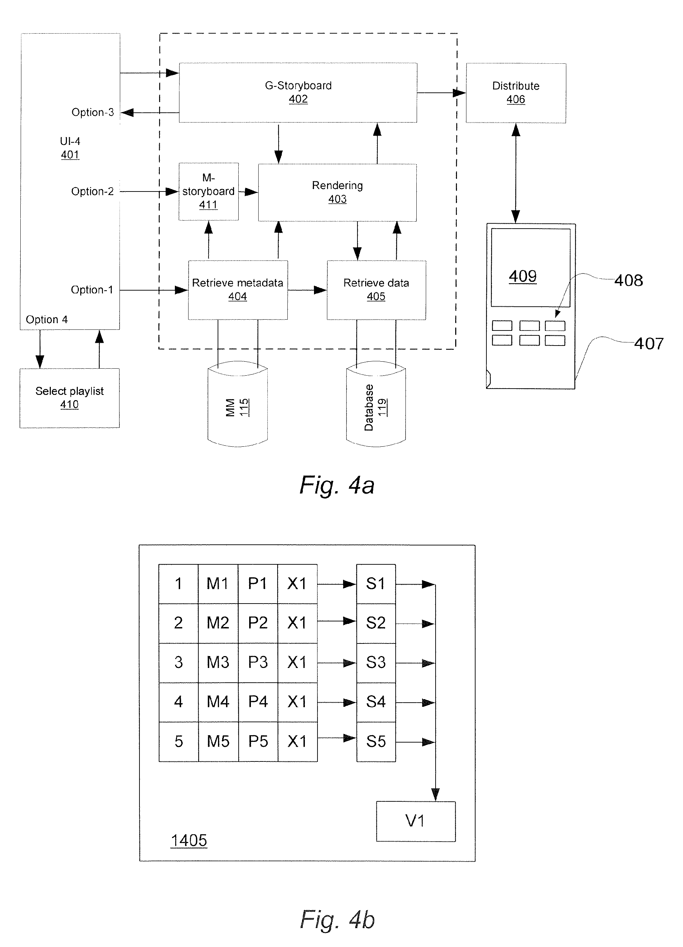

**Fig. 4a** illustrates a flow and a structure of preparing a sequence of images. A graphical image of a data set is generated by retrieving the data set defined by the entities of first metadata items and by rendering of the data set in accordance with the second metadata items. At a user interaction 401 (Ul-4), an option (option-1) of having a sequence of images e.g. in the form of a slide-show or a video prepared is provided. The option may involve selection from different options of selecting the metadata that describe the images for the sequence. One such option may be to have metadata from previously selected views or objects prepared as images in a sequence. Other ways may be to have metadata and presentation properties establishing a track history or metadata and presentation properties created as the result of calculations e.g. to detect certain occurrences of data such as positive or negative trends.

Thus the options for retrieving metadata are:
- collection from a table with records of metadata, and/or
- collection from a track history memory, and/or
- collection based on a performance criterion (KPI)

When the option is activated relevant metadata are retrieved from the memory 115 in step 404. The retrieved metadata are supplied to a metadata storyboard 411, which is a repository for storing the metadata that represents the presentations that are to be rendered for the sequence of images. Also, from the user interaction 401, an option (option 2) may be selected to select individual presentations (views or objects) for direct submission to the metadata storyboard 411. Option 2 can be used e.g. when a user is interacting with the user interface, performing an analysis, to have a presentation prepared. When a desired presentation is prepared and option 2 is selected, the metadata that describe the presentation are submitted to the metadata storyboard 411.

Rendering of the individual images for the sequence of images is performed in step 403 based on the metadata and further - via the metadata - based on the data described by the metadata. The data are retrieved in step 405 from the database 119. Thus, the data and the metadata form the basis for generating the images in step 403. The result of rendering the images is stored in a repository 402 to handle the sequence of images as a storyboard where the sequence of images can be edited. Thus, the storyboard comprises a sequence of images. In step 402 the storyboard can be edited to re-arrange the images or modify presentation of the images. A user can select an option 2 to edit the sequence of images. This editing may comprise re-arranging the sequence.

An option-4 is provided at user interaction 401 in order to define a list of pieces of music or sounds (a playlist) which can be used to add sound content to the sequence of images. In an embodiment different categories of playlists are defined and mapped to performance values of metadata. Thereby music can be selected for composition with the sequence of images in dependence of performance values of metadata at the storyboard. Playlists can be e.g. categorized as positive, negative or neutral.

When the sequence of images is completed, it can be distributed according to a selected format. The sequence may be distributed at step 406 to a mobile player configured for playback of the sequence. The mobile player may comprise a display 409 and keys 408 for operating the player.

Since the sequence of images is prepared from a storyboard of metadata wherefrom data are identified, retrieved and rendered, the sequence can be generated to comprise recent data whenever the sequence is generated again. Thereby changes in the content presented by the sequence of images may occur despite the metadata remaining unchanged.

The images and sound are rendered from the metadata and the data identified by the metadata. The rendering of the images can be carried out as described in connection with fig. 1. The data for the images are identified by the first metadata comprising: measures, dimensions, levels of dimensions, and dimension values. The presentation of the data is defined by the presentation properties of the second metadata. Additionally, the presentation can be modified by values of measures e.g. in relation to calculated values or estimates such as trend values and goal values or a property representing a desired development of values of the measure - which are also contained by the second metadata. Such a modification can also comprise sound and music as described above, where a playlist is selected in dependence on said values.

More specifically in connection with selection of a playlist wherefrom a piece of music can be selected for composition with an image, the following procedure can be used while examining the metadata. If a dimension is not related to a dimension of time, a neutral playlist is selected i.e. a playlist not categorized as positive and/or negative. For example, a neutral playlist may comprise a piece of music containing a substantially moderate tempo. If one measure is associated with the dimension, this measure is used for calculating a trend value. Otherwise, if several measures are associated with the dimension, the measure which is most dominantly used is selected and that measure is used for calculating a trend value. If several measures are equally qualified, a measure is selected e.g. alphabetically or randomly. The dimension and any dimension values and/or dimension levels are taken into account when the trend value is calculated. As mentioned above, a value can represent a desired development of values of the measure. Using this value, it can be determined whether the development is heading in a desired direction or an undesired direction. A respective playlist - positive or negative - can be selected, respectively. Further, a value can represent a threshold for determining the range of a neutral development. From one image to a following, the playlist can be re-selected to select a playlist that is relevant for the shown image.

In an embodiment, the retrieving and rendering of an image may be repeated for a number of images e.g. a number of images in a sequence of images. The repeating may continue until, for example, all images in the sequence of images have been retrieved and rendered.

Thus, there is provided a repeating of preparing a graphical image for multiple entities, of first metadata items, so as to provide a consecutive sequence of graphical images for different data sets.

Fig. 4b shows a structure of different types of metadata and an image sequence. The structure illustrates how the step of rendering may arrange different types of data.

The structure comprises a sequence of multi-media presentations S1, S2, S3, S4, S5 obtained by rendering, as specified by the graphical presentations properties P1, P2, P3, P4, P5; audio properties X1, ... X5; and data sets D1, D2, D3, D4, D5 identified from selected of the selectable records of metadata M1, M2, M3, M4, M5.

The sequence of multi-media presentations S1, S2, S3, S4, S5, is arranged in a sequence V1 which is configured with information for playback in a desired format.

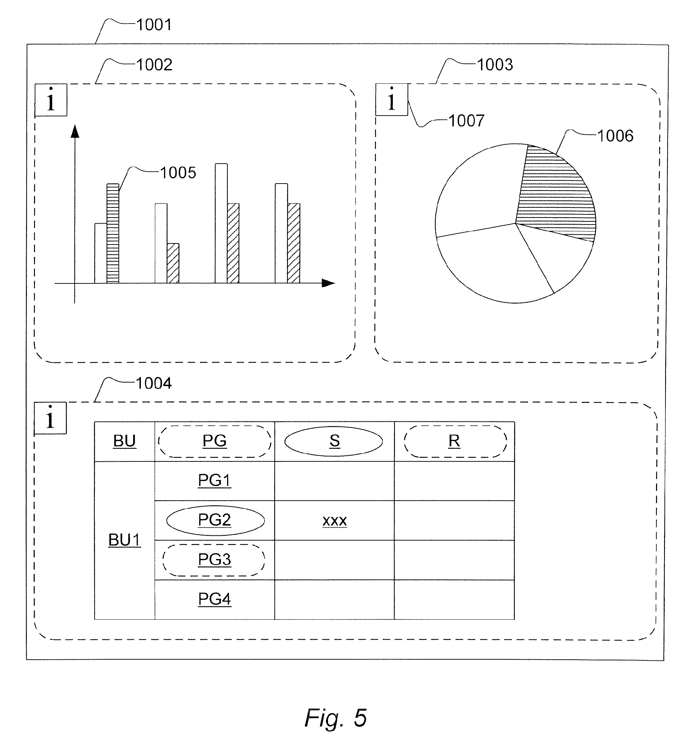

Fig. 5 shows a view structure. The view structure 1001 comprises a first graphical presentation object 1002 of a bar-graph type showing the measures 'Sales' and 'Revenue' along the dimension 'Time'.

Further, the view structure 1001 comprises a second graphical presentation object 1003 of a pie-chart type showing the measure 'Sales' along the dimension 'Business Unit'.

Still further, the view structure 1002 comprises a third graphical presentation object 1004 of a table type showing the measures 'Turnover' and 'Budget' along the dimensions 'Business Unit' and 'Products'.

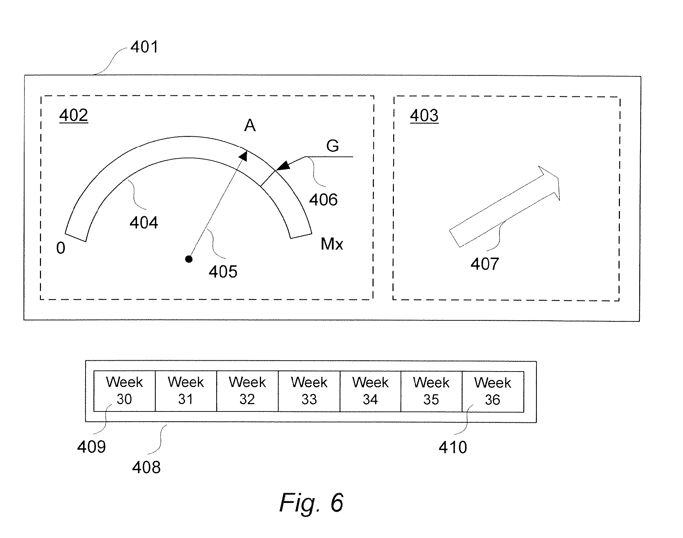

**Fig. 6** shows a data meter and a graphical control object. The data meter 401 comprises a first section 402 and a second section 403. The first section displays a meter scale 404 extending between values 0 and Mx. A pointer 405 points to a value A of the measure selected in a predefined way. The goal value G is shown by means of a pointer 406.

The second section 403 displays a trend arrow 407 which illustrates a trend value. The trend value can be in the form of a value representing the slope of a linearly approximated trend.

Below the data meter a graphical control object, which provides values of the criterion of dimension, is shown. The graphical control object is divided into divisions designated by 409;410, where a division represents a level of dimension, and where one or more divisions are selectable from a user interface so as to provide the values of the criterion of dimension for providing an updated trend value. As shown, each division comprises labels represent numbers of weeks corresponding to respective level of dimension. The shown week numbers (week 30 to week 36) are selected for display since these week numbers fulfil the criterion on the dimension.

A user can select a subset of the divisions to change the term over which the trend value is estimated. In an embodiment, the control 408 provides values to several data meters like the data meter 401.

A control may be displayed to extend the scope of week numbers or other type of dimension level.

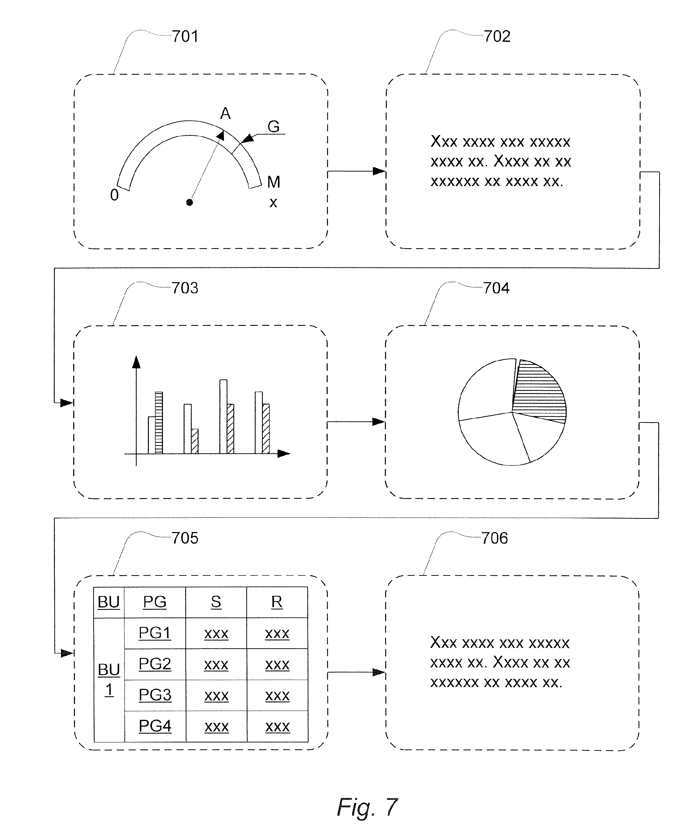

**Fig. 7** shows a sequence of images. The sequence may also comprise a sound track (not shown) for playback with the sequence of images. The sequence comprises a first image 701, a second image 702, and so forth through images 703, 704 and 705 to the last image 706.

In the above it should be noted that the term 'metadata items' comprises: measures and/or dimensions and/or measures and dimensions and/or criteria and/or measures and criteria and/or dimensions and criteria and/or measures and dimensions and criteria.

The term 'further identification' or 'identified further' relates to identification of a dataset in a further of more than one instance, whereby, in a first instance, the dataset is identified by e.g. a measure and a dimension and, in a second instance, by a criteria or dimension value. Alternatively, the order of the identifications of the first and second instance is reversed. Moreover, additional instances of 'further identification' can be referred to (e.g. firstly a measure, then a dimension and then a criterion).

Further, in the above it should be noted that the term 'presentation properties' designates any type of properties related to presentations. Therefore, in practical embodiments, different definitions of which 'presentation properties' that are stored in 'track history records' or 'presentation property records' can be applied. Typically, at least some presentation properties will be determined by or carried with graphical presentation objects.

It should be noted that the above description of a method can be implemented by a computer system with a memory loaded with a program that is configured to perform the method. Preferably, the computer system has a structure, when loaded with the program, as described above. However, it will be within the skills of person skilled in the art to use other suitable structures for performing the method.

Although an XML record structure has been described in the above, this description is not completely conforming to the XML standard as specified by the World Wide Web Consortium (www.w3.org), but it is within the skills of a computer programmer to provide an implementation given the description above. Other record structures and other technologies e.g. relational databases can be applied to implement storage and retrieval of track history records.

A program that is configured to perform the computer-implemented method as described above when run by a computer, can be distributed by means of a CD-ROM, DVD or other hard media or alternatively as a download signal via a computer network.

## Claims

1. A computer-implemented method of preparing a presentation of a data set retrieved from a database, comprising the steps of:
providing in a memory entities, of first metadata items, that define which data to include in a data set retrievable from a data superset stored in the database;
further providing in the memory second metadata items which define properties of a presentation of the data set by means of graphical objects specified by the properties;
preparing a graphical image of the data set by retrieving the data set defined by the entities of first metadata items and by rendering of the data set in accordance with the second metadata items; **CHARACTERIZED in** comprising:
repeating the step of preparing a graphical image for multiple entities, of first metadata items, so as to provide a consecutive sequence of graphical images for different data sets;
distributing the sequence for subsequent playback at a player station, so as to convey a collective presentation of the individual data sets for presentation in a progressive manner.

2. A computer-implemented method according to claim 1, wherein the entities, of first metadata items, comprise items that each defines which one-dimensional data to include in a data set; and wherein the metadata items comprised in combination by an entity define a multi-dimensional data set.

3. A computer-implemented method according to claim 2, comprising:
- calculating a value as a function of the values comprised by the data set and storing that value as a portion of the second metadata items;
- retrieving second metadata items that has a value satisfying a criterion and retrieving first metadata items related to the second metadata items to retrieve the data set selected by the first metadata items that are related to the second metadata items that has a value satisfying the criterion.

4. A computer-implemented method according to any of claims 1 to 3, comprising:
- providing a metric comprised by the second metadata items to represent a frequency at which the first metadata items that define which data to include in a data set was retrieved for the purpose of rendering a graphical image;
- retrieving second metadata items that have a value of the metric satisfying a criterion and retrieving first metadata items related to the second metadata items to retrieve the data set selected by the first metadata items that are related to the second metadata items that have a value satisfying the criterion.

5. A computer-implemented method according to any of claims 1 to 4, comprising:
- providing information to represent an order in which the entities of first metadata items was retrieved for the purpose of rendering a graphical image;
- retrieving second metadata items that have a value of the metric satisfying a criterion and retrieving first metadata items related to the second metadata items to retrieve the data set selected by the first metadata items that are related to the second metadata items that have a value satisfying the criterion.

6. A computer-implemented method according to any of claims 1 to 5, wherein the steps of retrieving the data set defined by the entities of first metadata items and preparing graphical images of the data set is performed as a timed activity.

7. A computer-implemented method according to any of claims 1 to 6, wherein the sequence of graphical images is distributed with timing information that specifies at which points in time, relative to each other, the images should be presented.

8. A computer-implemented method according to any of claims 1 to 7, wherein the step of preparing the sequence comprises adding audio information selected in dependence of the metadata items.

9. A method according to any of claims 1 to 8, wherein the step of preparing the sequence comprises adding metadata items of a record in a textual message for rendering on an image in the sequence.

10. A method according to any of claims 1 to 9, further comprising editing the sequence of graphical images before performing the step of distributing the sequence.

11. A computer system with a memory loaded with a program that is configured to perform the computer-implemented method according to any of claims 1 to 10 when run by the computer system.

12. A computer-readable medium encoded with a program that is configured to perform the computer-implemented method according to any of claims 1 to 10 when run by a computer.
